Europäisches Patentamt

European Patent Office

Office européen des brevets

(11) Publication number: **0 264 230**
**A1**

(12) **EUROPEAN PATENT APPLICATION**

(21) Application number: 87308938.7

(51) Int. Cl.⁴: **H04B 9/00**

(22) Date of filing: 08.10.87

(30) Priority: 09.10.86 GB 8624274

(43) Date of publication of application:
20.04.88 Bulletin 88/16

(84) Designated Contracting States:
AT BE CH DE ES FR GB GR IT LI LU NL SE

(71) Applicant: BRITISH TELECOMMUNICATIONS
public limited company
British Telecom Centre, 81 Newgate Street
London EC1A 7AJ(GB)

(72) Inventor: O'Mahony, Michael John
6 Priory Road
Felixstowe Suffolk, IP11 7NE(GB)
Inventor: Marshall, Ian
9 Cobbold Road
Woodbridge Suffolk, IP12 1HA(GB)

(74) Representative: Kennington, Penelope Anne
et al
British Telecommunications Intellectual
Property Unit 151 Gower Street
London WC1E 6BA(GB)

(54) Optical receiver.

(57) An optical receiver includes an antireflection coated laser preamplification stage(2). The laser amplifier provides a signal above the sensitivity of a low impedance amplifier, and therefore it is not necessary to use a high sensitivity amplifier. Avoidance of a high sensitivity amplifier enables a greater bandwidth to be achieved. The arrangement provides extended bandwidth performance at high bit rates over state of the art devices, and at low bit rates provides comparable performance with economical structure.

Fig.1

EP 0 264 230 A1

## OPTICAL RECEIVER

This invention relates to optical receivers and in particular but not exclusively to preamplification by laser amplifiers.

There are several types of high sensitivity optical receivers which are conventionally used: PIN photodiodes coupled to FET integrating receivers; PIN photodiodes coupled to transimpedance receivers which may be FET or bipolar transistor type; and integrating or transimpedance APD receivers. It is difficult to achieve high bandwidth with these receivers, the upper limit being of the order of 1 GHz.

The present invention is directed towards providing a wide bandwidth receiver together with a high sensitivity and simple construction for use at high bit rates and towards an economical structure when used at lower bit rates.

Accordingly the present invention provides an optical receiver comprising a laser amplifier, the output of which is coupled to a photodetector, and a low impedance amplifier responsive to the photodetector output.

According to a second aspect the invention provides an optical receiver comprising a laser amplifier having an input facet with a reflectivity $r_1$, a second facet opposite the input facet having a reflectivity $r_2$ and in which the product $r_1r_2$ is at most of the order of $10^{-6}$, a photodetector coupled to the output of the laser amplifier and an electrical amplifier responsive to the photodetector output.

The invention is now described by way of example with reference to the accompanying drawings in which:

Figure 1 illustrates schematically an embodiment of the invention;

Figure 2 shows a gain envelope bandwidth of a laser amplifier used in a prototype;

Figure 3 shows the passband detail of the laser amplifier used in a prototype;

Figure 4 illustrates theoretical and experimental sensitivity results;

Figure 5 shows relative magnitude of noise components in the prototype;

Figure 6 is a schematic illustration of light output from a light emitting element;

Figure 7 is a schematic illustration of a lens assembly used in a preferred embodiment of the invention, and

Figure 8 is a schematic cross section through a preferred embodiment of device package according to the invention.

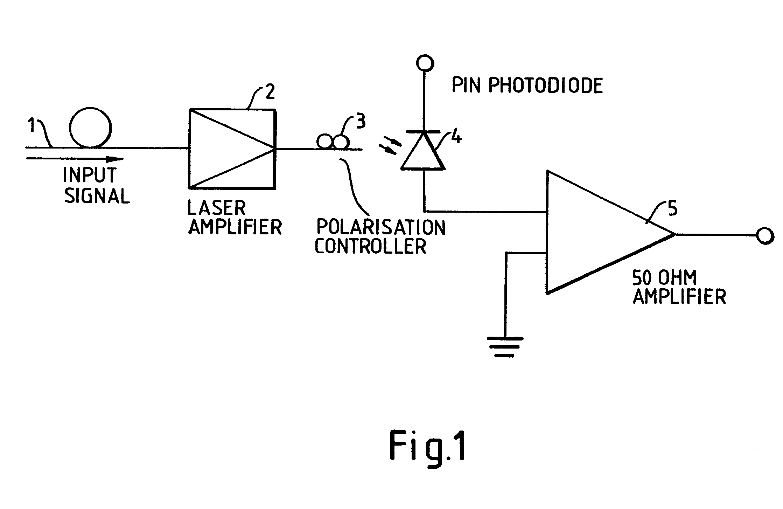

In Figure 1 the incoming signal on fibre 1 is input to a semiconductor laser amplifier 2 via a monomode fibre tail with a tapered lens, amplified output of the laser amplifier being launched into a tapered lensed fibre, through a polarisation controller 3 and then to a PIN photodiode 4. In a modification (not shown) the fibre end adjacent to the PIN photodiode is angled, at an angle of the order of 6°, and antireflection coated to a residual reflectivity of approximately 0.1%. This angling and coating reduces the wave reflected from the fibre end by at least 50dB compared with the incident signals, which eliminates problems associated with reflections back into the laser amplifier and the polarisation controller may be omitted. The output of the PIN photodiode is passed to a standard commercial low impedance amplifier 5 such as a 50 ohm amplifier with a bandwidth selected depending on the operation bandwidth, but may for example be in the range of 3 to 10 GHz. It is possible to use a simple (ie not high sensitivity) amplifier 5 because the semiconductor laser amplifier amplifies the signal level input to the PIN diode above the sensitivity level of the simple amplifier and thus it is not necessary to use a specialised high sensitivity amplifier which would necessarily have a high impedance and limit the bandwidth.

For wideband operation the noise figure of the amplifier 5 is not critical and a noise figure of 8dB is acceptable. Bandwidth limitation in the receiver will depend upon them PIN photodiode rise time and capacitance and the bandwidth of the low impedance amplifier. To optimise bandwidth in the photodiode low impedance amplifier combination a low rise time PIN photodiode is used and the total capacitance across the amplifier 5 is minimised. For example, in order to achieve a 10 GHz bandwidth with a 50 ohm amplifier 5 the total capacitance needs to be less than 0.3pf. Alternatively the input impedance of the amplifier may be lowered by a parallel resistor in order to alleviate the minimum capacitance requirement; this leads to additional thermal noise, but the overall sensitivity is not significantly reduced.

The laser amplifier itself will have an extremely large bandwidth, possibly of 3,000 to 4,000 GHz. However, superimposed on the passband is a series of ripples which are a consequence of residual reflectivity. It is desirable to have a flat gain characteristic and in order to approximate to that condition it is preferable to limit the pass band gain ripple to the order 3dB. The ripple is influenced by the gain and the facet reflectivities. If the term G $r_1r_2$, where G is the single pass gain and $r_1$ and $r_2$ are the reflectivities respectively of the input and output laser facets, has a value of the order of 0.17 then the passband ripple is of the order of 3dB. In terms of the reflectivities this means that the product $r_1r_2$ should be of the order of $10^{-6}$ for a gain of the order of 25dB. This is achieved by using anti-reflection coatings on the entry and exit facets of the laser. If the input and output is via a single facet, with the opposite facet being highly reflective, it is the product of the input/output facet reflectivity with the opposite facet reflectivity that is significant, and thus the input/output facet requires a very low reflectivity in order to achieve the desired 3dB passband ripple. It is advantageous if the input facet has a lower reflectivity than the output facet.

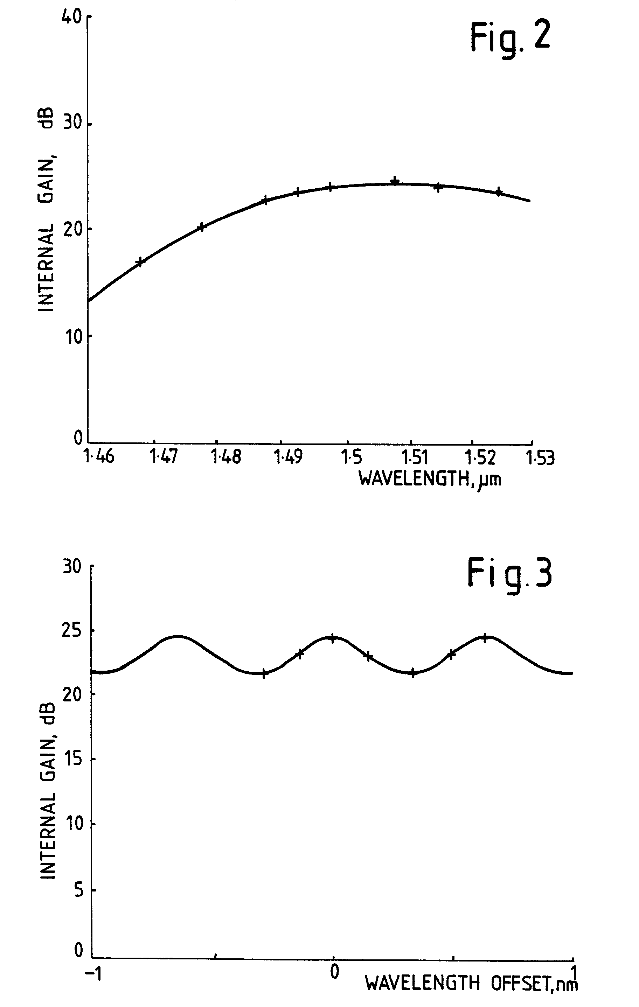

A detailed description of a particular prototype and its performance is now given with reference to Figures 2 to 5.

A simple laser-photo-diode (L/PD) receiver was constructed comprising a travelling wave semiconductor laser amplifier 2, a PIN-photodiode 4 with a 40ps rise time, and a commercial 50 ohm wideband amplifier 5 with a bandwidth of 2.0 GHz. The sensitivity of the PIN-diode and wideband amplifier arrangement, without any laser preamplifier, was measured as -22 dBm, for a bit error rate of $10^{-9}$, at 1 Gbit/s.

The laser amplifier was a DC-PBH laser (length = 500μm), with antireflection coatings on both facets, giving a residual reflectivity of $8 \times 10^{-4}$. At 25dB peak internal gain (ie excluding any coupling losses) the amplifier had a peak gain bandwidth of approximately 45nm (Figure 2), with a 3dB peak to trough gain ripple (Figure 3). The difference in gain between orthogonal signal polarisations was 2.5dB.

The laser input was via a monomode fibre tail, with an antireflection coated tapered lens for improved coupling efficiency. Input coupling efficiency is critical and in this prototype embodiment coupling loss was 4.5dB, but this is by no means the best attainable. The amplifier output was coupled to the PIN-photodiode via a coated fibre; the plain fibre end at the photodiode facet was also antireflection coated. A fibre polarisation controller was also included to reduce the effect of reflections from the photodiode facet. The elimination of reflections is most important for stable operation. With this configuration the losses between the amplifier output facet and the photodiode were 3.5dB, thus the net preamplifier gain was 17dB. The output fibre also performs spatial filtering of the laser spontaneous emission. For testing the receivers a grating tuned external cavity source was used in conjunction with an external modulator; the maximum bit rate was limited to 2 Gbit/s by the data source.

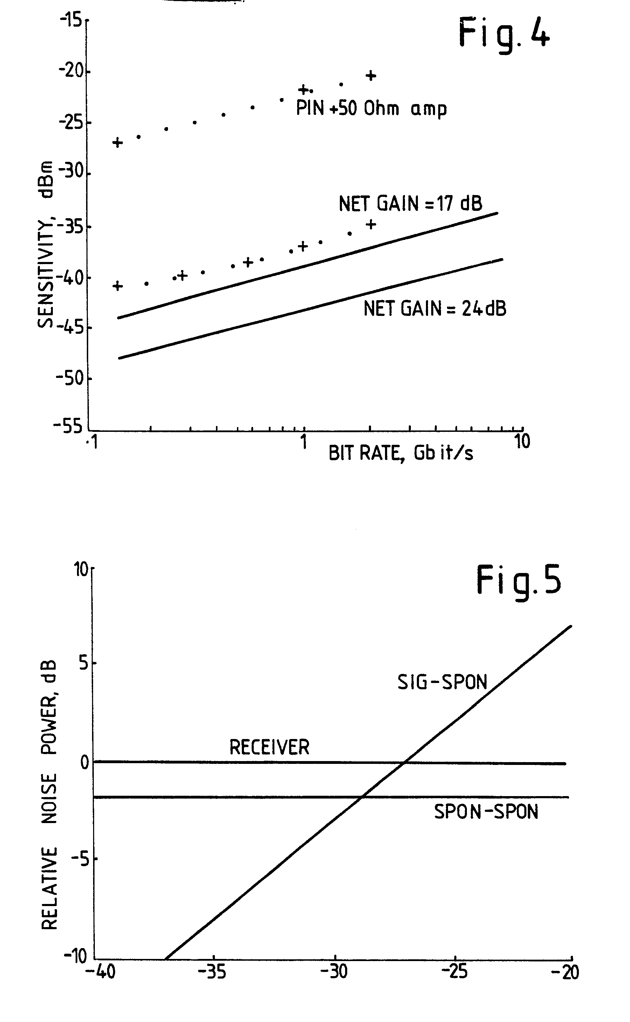

Performance: Figure 4 shows the experimental and theoretical results. The base sensitivity of the PIN photodiode and amplifier was -22dBm at 1 Gbit/s and -27dBm at 140 Mbit/s and changes at a rate of 1.5dB/octave. With a net amplifier gain of 17dB, the sensitivity ranges from -41dBm at 140 Mbit/s to -37dBm at 1 Gbit/s, changing approximately at a rate of 1.5dB/octave; thus with a gain of 17dB an improvement of 15dB in sensitivity is achieved. At 2 Gbit/s a sensitivity of -35dBm was obtained. The lower curve in Figure 4 shows the theoretical performance for an optimised preamplifier, with the internal gain increased to 30dB and input and output coupling losses of 3dB/facet and predicts a sensitivity of -43dBm at 1 Gbit/s, for example, which exceeds that of any other receiver design. A practical, and very important, advantage of having a PIN diode-low impedance amplifier is that the high mean value of photocurrent (approximately 130μA, with no optical filtering) due to the mean spontaneous emission of the amplifier does not overload the receiver, as it would do with a high impedance PIN diode/FET receiver. If an APD receiver was used the available gain would be reduced by the high input level, and there would be additional noise due to an increase in the effective dark current.

The theoretical analysis following Mukai et al Transactions on Microwave Theory and Techniques, Vol. MIT 30, No. 10, October 1982, p.1548 shows that the dominant noise components are the signal-spontaneous beat noise, the spontaneous-spontaneous beat noise and the receiver noise; optical filtering between amplifier and photodiode will reduce the spontaneous-spontaneous beat component. These are shown in Figure 5, relative to receiver noise as a function of input power for G = 25dB (all the components have the same bit rate dependence, which can therefore be ignored in this comparison). It is clear that at an input power of -37dBm, the receiver noise is dominant. For this reason optical filtering prior to the photodiode is of little value (in this case) and this was verified experimentally using a 2.5nm tunable Fabry Perot filter, with an insertion loss of 2dB in the photodiode fibre tail; the improvement was 0.7dB at 1 Gbit/s (giving a sensitivity of -37.7dBm) and 1.5dB at 140 Mbit/s (giving a sensitivity of -42.5dBm). The effect of increased amplifier gain is to reduce the receiver noise contribution by a factor of $G^2$; thus if the gain is increased further, or a lower noise receiver is used, the spontaneous-spontaneous noise component dominates and the performance is significantly improved by the inclusion of an optical filter.

It will be noted from the above description of the prototype that it is important to prevent reflection from the fibre and photodiode re-entering the laser in the reverse path. In the embodiment shown this is achieved by providing an anti-reflection coating on the tapered lens on the fibre adjacent the output facet of the laser. The fibre end adjacent the photodiode is also provided with an anti-reflection coating.

In addition to these coatings the polarisation controller 3 also inhibits reflection effects by enabling the polarisation to be adjusted so that any reflected signal reaches the output facet of the laser at a different polarisation to the preferred laser polarisation.

In Figure 1 the PIN photodiode 4' is shown connected to the laser amplifier 2 via a fibre, as an alternative the optical link may be through free space with the laser and photodiode being closely spaced or even fabricated on the same chip. In this mode in order to minimise reflections the amplifier output facet and photodiode may be angled with respect to each other. If the laser and photodiode (or indeed other type of photodetector) are fabricated integrally an on-chip waveguide may also be used for coupling.

The receiver described has the advantage of not being limited by the bandwidth of a high sensitivity electrical amplifier, and of utilising a low impedance electrical amplifier. Within the context of this specification it should be realised that the conventional PIN/FET receivers have input impedances of the order of at least $10^6$ ohms and APD receivers generally have input impedances of at least $5 \times 10^3$ ohms, and it is in comparison with these impedances that the expression 'low impedance' is used.

Use of a low impedance amplifier enables the photodiode to be positioned immediately adjacent the laser amplifier without the problem of laser amplifier spontaneous noise overloading the electronic circuitry.

A receiver constructed according to the invention has significantly improved performance at high bit rates over receivers using high sensitivity amplifiers, and in particular does not suffer a 1 GHz bandwidth limitation. At low bit rates a structure according to the invention may provide an economical alternative to existing receivers. In order to improve sensitivity at low bit rates an optical filter may be incorporated.

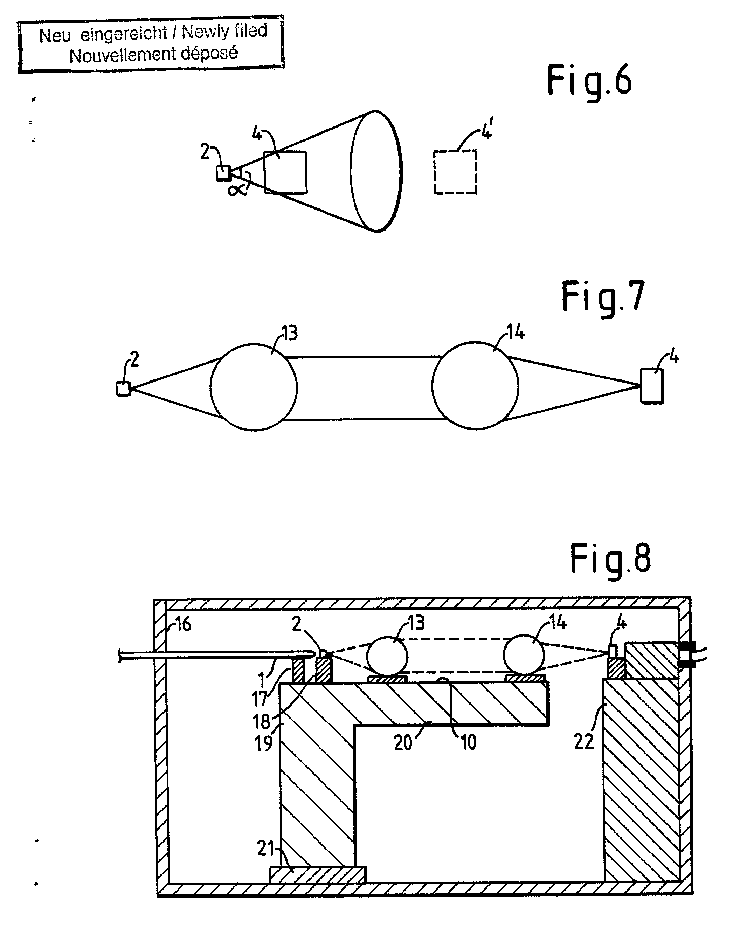

A preferred embodiment of the invention is shown in more detail in Figure 8 and is described with reference to Figures 6 and 7. Light output from the laser is typically distributed over a cone of apex angle $\alpha$ as shown schematically in Figure 6. The photodetector 4 needs to be positioned very close in order to couple efficiently with the laser 2, if the photodiode is placed too far from the laser, as shown by position 4', then a large proportion of the output cone of light from the laser is lost. In practice the laser and PIN photodiode need to be positioned so close that fabrication of both devices, together with any required intervening element such as a polariser or filter, on a single chip is necessary. A problem that can arise with such an integrated single chip assembly is that for consistent operation the laser requires a steady temperature, this normally being provided by a Peltier cooler.

However, the operation of the Peltier cooler causes movement and thus if the laser/photodiode chip moves it is necessary for the connections to the chip to be flexible. For high bandwidth response the connections to the photodiode must be rigid otherwise parasitic capacitances and/or inductances in flexible connections will operate to reduce bandwidth, and so the integrated chip must include the receiver amplifier or the Peltier cooler must be located outside the package, both of which present problems in realisation. Figures 7 and 8 show schematically an embodiment of the invention in which a lens assembly (an example of which is shown in Figure 7) is used to enable the laser to be mounted on an in package Peltier cooler with the photodiode mounted separately, rigidly to the package despite the relative movement between the laser and photodiode caused by the Peltier cooler. The lens arrangement comprises two spherical lenses having focal lengths generally in the range of 100μm to 500μm and preferably about 150μm to 250μm. These lenses have high refractive indexes, generally in the range of 1.5 to 2.2, and are anti-reflection coated. For a target facet of 100μm on the photodiode 4, spherical lenses of refractive index 2, focal length of 200μm and a lens diameter of 2mm have been found satisfactory. The first lens 13 is located a focal length from the light emitting element 1, so that a substantially parallel beam emerges from the lens 13 directed towards the second lens 14. At the second lens 4 the parallel beam is focussed back to a spot. Due to spherical aberration the beam is not focussed to a unique focus, but a range of foci depending upon the passage through the lens. This range of foci also has superimposed upon it other variables such as asymmetry in the output of the laser 2 and the presentation geometry of the photodiode 4 which may be inclined in order to prevent reflection back to the laser 2. For these reasons the best location for the photodiode 4 is found empirically by sweeping it through a range of locations around the focal distance from the second lens. When this is done it is generally found that at a distance larger than the nominal focal length there is a range of locations at which the spot size is well within the size of the target facet and the received intensity is at a constant maximum. Outside this range the spot size increases and the intensity of light that is collected falls off. The target facet of the photodiode 4 is then positioned in the centre of this range of locations for the constant maximum, termed herein the 'focal range'.

Figure 8 shows in more detail a package incorporating the lens assembly of Figure 7. A tapered, lensed fibre 1 enters through a feedthrough in an outer package wall 16, is supported on a glass bead 17 and is positioned close to the input port of a semiconductor travelling wave amplifier 2. The output beam from the laser is focussed via lenses 13 and 14 on to the light receiving facet of PIN diode 4. Exemplary spacings for the assembly are 200μm between the laser 2 and lens 13, 5mm between lenses 13 and 14 and 300μm between lens 14 and diode 4. The laser chip is mounted on a mounting block 18 which is attached to a brass block 19 that has a shelf 10 on which the lenses 13 and 14 are carried. Since the laser output is temperature sensitive the brass block 19 is mounted on a Peltier cooler 21 that retains the temperature at a preselected operating value (eg 25°C) irrespective of changes in ambient temperature. The Peltier cooler is subject to thermal expansion and contraction during operation and this causes beam waiver as this motion is transmitted to the laser. However, it has been found that the movement of the spot on the target face of the PIN diode due to beam waiver can be tolerated because the lens focussing arrangement maintains the spot within the target area. This arrangement enables use of a within package Peltier cooler which can therefore be smaller and have a smaller time constant than would a Peltier cooler for the complete package. The PIN diode can not be mounted on the Peltier cooler (or on the attached brass block 9, 10) because it needs to be rigidly connected to the package for high frequency response, and so it is mounted on its own support 22 along with the receiver electronics (not shown) which in the case of a laser preamplifier receiver may be a wideband low impedance amplifier or a high impedance amplifier.

The comparatively large size of the first lens 3, compared with a photodiode facet, means that it can be positioned further from the laser than the photodiode would need to be. In manufacture of the device shown in Figure 8 the first lens 13 needs to be located with the centre of the lens centred on the axis of the laser and photodiode, a typical location accuracy being about 1μm. If the first lens is positioned slightly incorrectly, for example with an error of ±2μm, this can be compensated for in the location of the second lens. Since the photodiode facet is much larger than the laser facet the alignment accuracy of the second lens 14 is less stringent, about 10μm for a 100μm facet or about 3 to 5μm if a compensation for a first lens misplacement has to be made, and thus the alignment procedure during manufacture is more flexible than a close proximity laser photodiode alignment would be. The lens is also much larger than the photodiode facet which again eases alignment.

The lenses 13 and 14 may be spaced more closely, but with the spacing given another optical element may be interposed between the lenses. For example with a high impedance receiver amplifier a shutter, edge filter or band pass filter may be included, or a polariser may be inserted with either low or high impedance amplifiers. The filter or other optical element and the photodiode 2 are inclined with respect to the beam axis in order to avoid reflecting light back into the laser. The lenses need not be spherical lenses, one or both of the lenses could be replaced by rod lenses, preferably plano-convex rod lenses. The lenses may also be of different sizes, the actual lens sizes and relative sizes being determined by the spot size required and the aberration that can be tolerated. If the second lens is larger than the first then the spot is magnified, whereas if the second lens is smaller than the first the spot size is reduced. Smaller lenses also exhibit smaller aberration which also minimises spot size. With the lenses described in the embodiment of Figure 8 coupling between the laser and the PIN diode can be achieved with a loss of 0.5dB or less.

A comparable assembly to that described for a laser amplifier and photodiode may be utilised for other light emitting and light receiving elements. For example other signal processing stages prior to receiving such as tunable filters or signal shaping may replace the laser amplifier, or be used in sequence with a laser amplifier. The lens assembly is particularly useful where the mounting criteria of the elements lead to relative movement being experienced between the elements. The lens assembly also enables the elements to be relatively remote.

## Claims

1. An optical receiver comprising a laser amplifier, the output of which is coupled to a photodetector, and a low impedance amplifier responsive to the photodetector output.

2. An optical receiver comprising a laser amplifier having an input facet with a reflectivity $r_1$, a second facet opposite the input facet having a reflectivity $r_2$ and in which the product $r_1r_2$ is at most of the order of $10^{-6}$, a photodetector coupled to the output of the laser amplifier and an electrical amplifier responsive to the photodetector output.

3. An optical receiver comprising a laser amplifier the output of which is coupled to a photodetector via a lens assembly comprising a pair of lenses positioned with the laser amplifier at the focus of the first encountered of the lenses in the direction of the emitted light and the photodetector in the focal range of the second encountered of the lenses, and an electrical amplifier responsive to the photodetector output.

5. An optical receiver according to claim 3 or claim 4 in which the lenses are spherical lenses.

6. An optical receiver according to any preceding claim in which the laser amplifier is mounted on a Peltier cooler and the photodetector is not mounted on said Peliter cooler.

7. An optical receiver according to any preceding claim in which the input facet of the laser amplifier comprises an anti-reflection coating.

8. An optical receiver according to claim 6 or claim 7 in which the means comprises a polarisation controller between the laser and photodetector. W

9. An optical receiver according to claim 6 in which the means comprises angling the photodetector surface relative to the normal of the incident beam.

10. An optical receiver according to any preceding claim in which the photodetector and laser are interconnected by a waveguide.

11. An optical receiver according to claim 10 in which the waveguide comprises an optical fibre.

12. An optical receiver according to any preceding claim in which the laser and photodetector are fabricated integrally.

13. An optical receiver according to any preceding claim in which the laser amplifier comprises a travelling wave laser amplifier.

14. An optical receiver according to any preceding claim in which the laser amplifier has a maximum passband ripple of the order of 3dB.

15. An optical receiver according to any preceding claim in which the amplifier responsive to the photodetector output comprises a 50 ohm input impedance amplifier.

16. A device package comprising a light emitting element supported on a first mounting and a light receiving element supported on a second mounting and in which, when operating, relative movement occurs between the light emitting element and the light receiving element, and a lens assembly supported on said first mounting for directing light from the light emitting element on to the light receiving element, the lens assembly comprising a first lens located with the light emitting element at its focus and a second lens aligned with the first lens and with the light receiving element located within the focal range of the second lens.

Fig.1

0 264 230

Fig. 2

Fig. 3

0 264 230

# Fig. 4

PIN +50 Ohm amp

NET GAIN = 17 dB

NET GAIN = 24 dB

SENSITIVITY, dBm

BIT RATE, Gb it/s

# Fig. 5

SIG-SPON

RECEIVER

SPON-SPON

RELATIVE NOISE POWER, dB

Fig.6

Fig.7

Fig.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | ELECTRONICS LETTERS, vol. 16, no. 6, 13th March 1980, pages 233-235, Hitchin, GB; Y. YAMAMOTO et al.: "Optical receiver sensitivity improvement by a semiconductor laser preamplifier" * Page 233, right-hand column, "Introduction"; page 235; figures * | | H 04 B 9/00 |
| A | IEEE JOURNAL OF QUANTUM ELECTRONICS, vol. QE-17, no. 6, June 1981, pages 1028-1034, IEEE, New York, US; T. MUKAI et al.: "Gain, frequency bandwidth, and saturation output power of AlGaAs DH laser amplifiers" * Page 1028, left-hand column, lines 1-6; page 1030, right-hand column, lines 9-11; page 1031, left-hand column line 5 - right-hand column, line 7; page 1033, left-hand column, line 21 - right-hand column, line 9; page 1034, left-hand column, lines 14-25 * | | |
| A,D | IEEE TRANSACTIONS ON MICROWAVE THEORY AND TECHNIQUES, vol. MTT-30, no. 10, October 1982, pages 1548-1556, IEEE, New York, US; T. MUKAI et al.: "S/N and error rate performance in AlGaAs semiconductor laser preamplifier and linear repeater systems" * Page 1550, figure 1; page 1551, left-hand column, lines 21-24; page 1556, left-hand column, lines 20-23,44-47 * ---                     -/- | | **TECHNICAL FIELDS SEARCHED (Int. Cl.4)** H 04 B H 03 F H 01 S |

The present search report has been drawn up for all claims

| Place of search | Date of completion of the search | Examiner |
|---|---|---|
| THE HAGUE | 05-01-1988 | VEAUX,C.J. |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

 

& : member of the same patent family, corresponding
 document

EPO FORM 1503 03.82 (P0401)

EP 87 30 8938

## European Patent Office

## EUROPEAN SEARCH REPORT

Application Number

# DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,P | ELECTRONICS LETTERS, vol. 22, no. 23, 6th November 1986, pages 1238-1240, Stevenage, Herts, GB; M.J. O'MAHONY et al.: "Wideband 1.5mum optical receiver using travelling-wave laser amplifier" * Page 1239, left-hand column, line 17 - right-hand column, line 4; figure 1 * | 1,7,10, 13 | |
| A | Idem | 8 | |

TECHNICAL FIELDS SEARCHED (Int. Cl.4)

The present search report has been drawn up for all claims

| Place of search | Date of completion of the search | Examiner |
|---|---|---|
| THE HAGUE | 05-01-1988 | VEAUX,C.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)